# EUROPEAN PATENT APPLICATION

(11) **EP 1 184 119 A1**
(43) Date of publication of application: **06.03.2002**
(21) Application number: 00203028.6
(22) Date of filing: 31.08.2000
(51) Int. Cl.: B23D 61/18

(54) **Tool for cutting organic material comprising a twisted cutting wire having a sharp pointed cross-section**

(71) Applicant: N.V. BEKAERT S.A., 8550 Zwevegem (BE)
(72) Inventor: Dauwe, Daniel, 9032 Gent (BE)
(74) Representative: Messely, Marc

(57) **Abstract**

A tool for cutting organic material comprising saccharides, lipids or proteins is provided. The organic material may be food such as bread, meat or vegetables. The tool comprises a wire (10) having a cross-section with at least one sharp point (16). The wire is made of steel, preferably stainless steel. The wire is preferably twisted around its longitudinal axis.

## Description

### Field of the invention.

The present invention relates to a tool for cutting organic material such as food. It also relates to an apparatus for cutting organic material and to a knife for cutting organic material.

### Background of the invention.

Organic material such as food is conveniently cut by means of a rotating metal disc with a sharpened edge or by means of one or more blades placed in a frame and provided with a sharpened edge.
Although being in use for a long time, both means present some drawbacks.
Both the disc and the blade embodiment have the drawback of requiring a lot of metal volume. Only a small part of the metal volume is used for the cutting purpose.
Another drawback of the disc as well as of the blades is that they both necessitate considerable replacement times once they have become blunt.

### Summary of the invention.

It is an object of the present invention to avoid the drawbacks of the prior art.
It is an object of the present invention to provide an alternative for the existing discs and blades for the cutting of organic material such as food.
It is an object of the present invention to save metal material.
It is still another object of the present invention to provide for an alternative where replacement times are considerably reduced.

According to a first aspect of the present invention, there is provided a tool for cutting organic material, which comprises saccharides, lipids or proteins.
The organic material can be food such as bread, meat or vegetables.
The organic material can also be grass or twigs.
The tool comprises a wire with a cross-section with at least one sharp point.
The wire is made of steel, preferably stainless steel.
The wire further has a longitudinal axis and is preferably twisted around this longitudinal axis.

Cutting tools comprising a wire twisted around its longitudinal axis or twisted with other wires do exist as such. Examples are disclosed in US-A-4,709,699, US-A-4,580,545, US-A-4,418,263 and US-A-3,662,637. These patent documents, however, disclose completely different uses or applications. US-A-4,709,699 discloses the use in surgery. US-A-4,580,545 discloses the use for the cutting of stones. US-A-4,418,263 discloses the use as electrodischarge machining wire. US-A-3,662,637 discloses the use for cutting plate or textile like material.

The sharp point of the food-cutting wire according to the first aspect of the invention has a radius of curvature smaller than 0.10 mm, preferably smaller than 0.05 mm in order to provide the required cutting action.

In a preferable embodiment, part of the cross-section of the food-cutting wire has a triangular shape, formed by said sharp point and by two sides running away from said sharp point.
Most preferably the cross-section of the food-cutting wire further comprises a base part. This base part protrudes outside an extrapolation of the two sides of the triangle. Such a base part facilitates the deformation into a triangular shape and the sharpening of this triangular part.

In a particular and advantageous embodiment the food-cutting wire may be coated with a diamond-like carbon (a-C:H) or with a diamond-like nanocomposite (a-C:H / a-Si:O) coating. Such coatings provide the food-cutting wire with a high degree of hardness, a low coefficient of friction, and a high resistance against wear and anti-sticking properties.

Moreover, such coatings are chemically inert and, as a consequence, fit for cutting articles of food.

According to a second aspect of the present invention, there is provided an apparatus for cutting organic material comprising a cutting tool according to the first aspect of the invention. The apparatus further comprises means for moving the wire relative to said organic material. Two main embodiments of the apparatus are provided.
A first embodiment is a relatively small apparatus for daily use, e.g. in a kitchen. Here the wire is comprised in a module where it forms a closed loop. Having become blunt, the module can be replaced by a new module in a quick way.
A second embodiment is a relatively greater apparatus for more professional use, e.g. at a baker's shop. Here the wire may form an open loop and the apparatus further comprises an unwinding unit for unwinding the wire and a winding unit for winding the wire up. The wire, the winding unit, the unwinding unit and any other present wire guiding means are here also comprised in a separate module. The separate module may be replaced as a whole after the wire has become blunt.

According to a third aspect of the present invention, there is provided a knife with a handle and a food-cutting wire according to the first aspect of the present invention.

The food-cutting wire can be used for cutting all sorts of articles of food, for example for cutting bread, meat and vegetables.

### Brief description of the drawings.

The invention will now be described into more detail with reference to the accompanying drawings wherein
- FIGURE 1 shows a cross-section of a food-cutting tool according to the invention together with a detailed view of its sharp point ;
- FIGURE 2 shows a twisted food-cutting tool;
- FIGURE 3a, FIGURE 3b, FIGURE 3c, FIGURE 3d, FIGURE 3e and FIGURE 3f all show cross-sections of food-cutting wires according to the invention ;
- FIGURE 4 schematically shows a professional apparatus for cutting bread ;
- FIGURE 5 schematically shows a kitchen apparatus for cutting vegetables;
- FIGURE 6 schematically shows a knife.

### Description of the preferred embodiments of the invention.

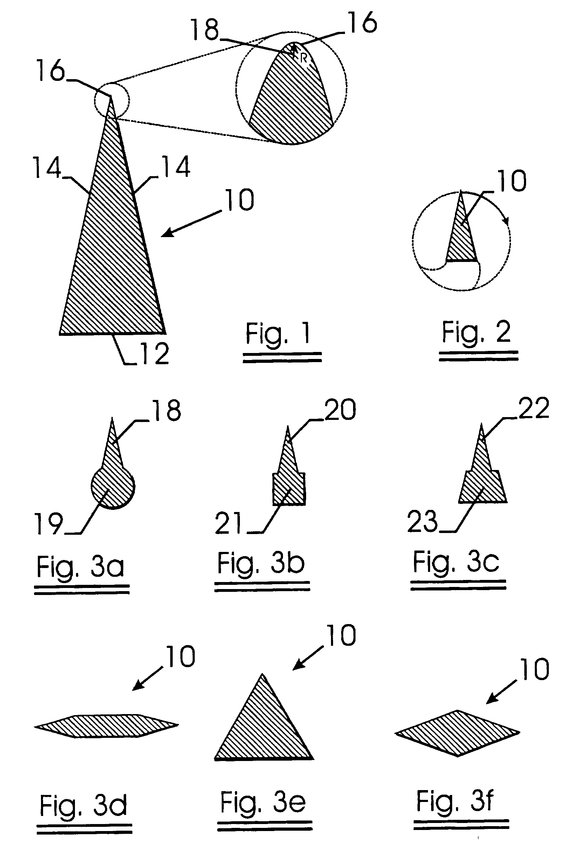

FIGURE 1 shows a cross-section of a wire 10 for cutting organic material according to the invention.
In what follows the 'wire for cutting organic material' will be referred to as a food-cutting wire.
Food-cutting wire 10 has a triangular shape. The triangle has a small base side 12 and two long sides 14 ending in a sharp point 16. Sharp point 16 has a radius of curvature of 0.05 mm. Typical other dimensions are as follows:
- base side 12 : 0.25 mm - 0.90 mm
- long sides 14 : 1.0 mm - 4.0 mm

FIGURE 2 shows a food-cutting wire 10 twisted along its own longitudinal axis. Typical twisting pitches range from 1 cm to 10 cm. The twisting pitch depends upon the cutting speed, the cutting pressure and the dimensions of the wire.
The greater the cutting speed the smaller the twisting pitch, the greater the cutting pressure, the smaller the twisting pitch, and the greater the wire dimensions the greater the twisting pitch.
Preferably the part of the sharp point of food-cutting wire 10 has a hardness which is higher than the hardness of the remaining base of the wire 10. The higher hardness of the sharp point is required for the cutting action. The lower hardness of the base is required for enabling the wire to be twisted around its longitudinal axis. The difference is hardness may be obtained by a flame treatment of the sharp point before the twisting operation.

FIGUREs 3a, 3b, 3c, 3d, 3e and 3f all show various other cross-sections of food-cutting wires according to the invention.
The food-cutting wire in FIGURE 3a has a triangular part 18 and a thicker round base 19.
The food-cutting wire in FIGURE 3b has a triangular part 20 and a thicker square base 21.
The food-cutting wire in FIGURE 3c has a triangular part 22 and a thicker trapezoidal base 23.
FIGURE 3d shows a food-cutting wire 10 with two sharp points. It is made from a flat or rectangular wire where two sharp points have been made.
FIGURE 3e shows a food-cutting wire 10 with an equilateral triangle as cross-section and three sharp points.
FIGURE 3f shows a food-cutting wire 10 with a cross-section in the form of a rhomb and with two, possibly four sharp points.

A food-cutting wire can be made by cold drawing a stainless steel wire until an intermediate diameter and by further profile drawing or rolling the wire to a desired rough cross-section. A final rolling operation, e.g. by means of Turk's heads may provide the sharp point.
A thicker base is advantageous since it allows the wire to be gripped firmly during the profiling of the triangular part and during the sharpening.
After the final rolling operation the wire may be or may not be provided with a diamondlike carbon coating by means of a plasma-assisted chemical vapor deposition process.
Thereafter the wire is twisted.

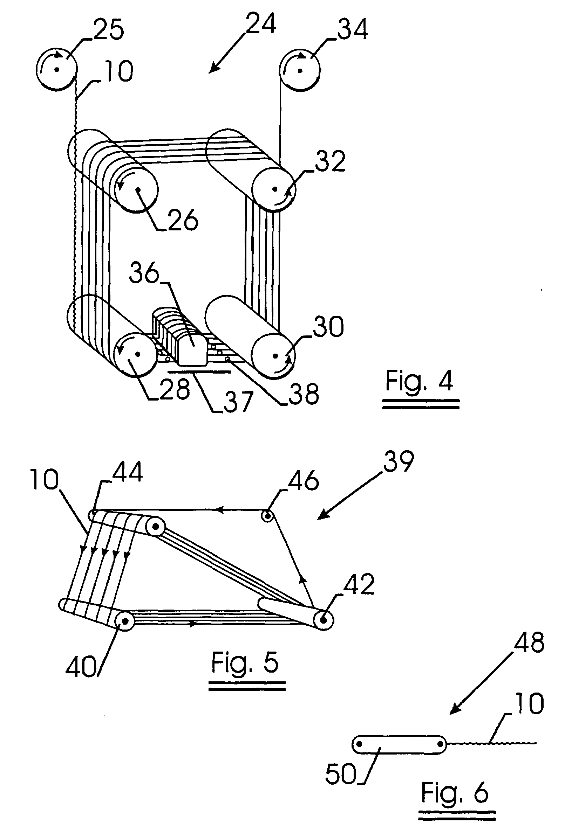

As a matter of example, FIGURE 4 schematically shows an apparatus 24 for cutting bread at a baker's shop. Food-cutting wire 10 is unwound from a supply spool 25 and is guided a number of times around guiding drums 26, 28, 30, 32. In fact food-cutting wire 10 is wound as many times around the guiding drums 26, 28, 30, 32 as the maximum number of slices to be cut in the bread in one single operation. Finally the food-cutting wire 10 is wound on a spool 34. A bread 36 may be positioned on a platform 37 between guiding drums 28 and 30. During the cutting the platform 37 moves the bread 36 relatively upwards with respect to the apparatus 24 and the wire moves from the left side to the right side with respect to the bread, as a consequence of the winding operation. Means 38 may be provided to keep the different turns of the wire 10 at the same distance. Since the food-cutting wire 10 is twisted the sharp point 16 also rotates and provides an average cutting operation irrespective of the position of the food-cutting wire. Once the food-cutting wire 10 is completely unwound, the direction of winding may be reversed.

FIGURE 5 shows schematically an apparatus 39 for daily use in a kitchen. The food-cutting wire 10 is makes a number of windings around wire guidings 40, 42 and 44. This number of windings corresponds to the maximum number of slices to be cut in one single operation. The difference between the apparatus 38 and apparatus 24 of FIGURE 4 is that in FIGURE 5 the food-cutting wire 10 forms closed loop. There is no unwinding and winding unit. Instead guiding the food-cutting wire around a wire guide 46 forms a closed loop.
Moving the food-cutting wire 10 relatively to the organic material to be cut performs the cutting action. Providing means (not shown) which translate a vertical manual downward movement into a rotational movement of the wire guides 40, 42, 44 and 46 may provide the relative movement of the food-cutting wire 10.

FIGURE 6 discloses a knife 48. Knife 48 comprises a handle 50 with a food-cutting wire 10 according to the invention. Knife 48 can be an element of a party set to be used, for example, at barbecues. Here the cutting action is performed manually.

## Claims

**1.** A tool for cutting organic material comprising saccharides, lipids or proteins, said tool comprising a wire having a cross-section with at least one sharp point, said wire being made of steel.

**2.** A cutting tool according to claim 1, said wire said wire having a longitudinal axis and being twisted around said longitudinal axis.

**3.** A cutting tool according to any one of the preceding claims wherein said sharp point has a radius of curvature which is smaller than 0.10 mm.

**4.** A cutting tool according to any one of the preceding claims wherein part of said cross-section has a triangular shape, formed by said sharp point and by two sides running away from said sharp point.

**5.** A cutting tool according to claim 4 wherein said cross-section further comprises a base part, said base part protruding outside an extrapolation of said two sides.

**6.** A cutting tool according to claim 4 wherein said cross-section further comprises a base part, said base part having a hardness which is lower than the hardness of said sharp point.

**7.** A cutting tool according to any one of the preceding claims wherein said steel is a stainless steel.

**8.** A cutting tool according to any one of the preceding claims wherein said wire is coated with a diamondlike carbon coating.

**9.** A cutting tool according to any one of the preceding claims wherein said cutting tool consists of said wire.

**10.** An apparatus for cutting organic material comprising saccharides, lipids or proteins, said apparatus comprising :
a) a cutting tool according to any one of the preceding claims ;
b) means for moving said wire relative to said organic material.

**11.** An apparatus according to claim 10 wherein said wire forms a closed loop.

**12.** An Apparatus according to claim 10 wherein said forms an open loop, said apparatus further comprising :
c) an unwinding unit for unwinding said wire;
d) a winding unit for winding said wire.

**11.** A knife comprising a handle and a food-cutting tool according to any one of claims 1 to 9, said food-cutting tool being attached to said handle.

**12.** Use of a food-cutting tool according to any one of claims 1 to 9 for cutting bread.

**13.** Use of a food-cutting tool according to any one of claims 1 to 9 for cutting meat.

**14.** Use of a food-cutting tool according to any one of claims 1 to 9 for cutting vegetables.
